# EUROPEAN PATENT SPECIFICATION

(11) **EP 1 796 326 B1**
(45) Date of publication and mention of the grant of the patent: **18.01.2012**
(21) Application number: 05791501.9
(22) Date of filing: 21.09.2005
(51) Int. Cl.: H04L 12/56, H04L 29/02

(54) **A METHOD FOR ENABLING COMMUNICATION IN APPLICATION SERVERS**
VERFAHREN ZUM ERMÖGLICHEN EINER KOMMUNIKATION IN ANWENDUNGSSERVEN
PROCEDE POUR PERMETTRE UNE COMMUNICATION DANS DES SERVEURS D'APPLICATION

(30) Priority: 21.09.2004 CN 200410078266
(43) Date of publication of application: 13.06.2007
(73) Proprietor: Huawei Technologies Co., Ltd., Longgang District, Shenzhen Guangdong 518129 (CN)
(72) Inventor: LUO, Long Huawei Administration Building, Shenzhen Guangdong 518129 (CN)
(74) Representative: Körber, Martin Hans
(86) International application number: PCT/CN2005/001523
(87) International publication number: WO 2006/032204

(56) References cited:
- WO-A-03/030429
- WO-A-2004/034719
- WO-A1-2004/059946
- WO-A2-2004/075507
- US-A1- 2004 037 407
- US-A1- 2004 133 686

## Description

### Field of the Invention

The present invention relates to information transmission technologies, more particularly, to a method and a system for implementing communications between Application Servers (AS-s).

### Background of the Invention

Along with the development of broadband networks, mobile communications are no longer limited to traditional voice communications. Various media, such as audio, video, picture and text, are gradually involved in communications to meet diversified demands of users in conjunction with such data services as presence service, Short Message Service (SMS), Web browsing service, positioning service, PUSH service, and file sharing service.

By the force of various applications, the 3^{rd} Generation Partnership Project (3GPP) provides an IP Multimedia Subsystem (IMS) architecture on the basis of IP to support various multimedia applications. And the Open Mobile Alliance (OMA) provides an OMA Service Environment (OSE) as a service implementation layer on top of the IMS architecture to provide more alternations and more various experiences.

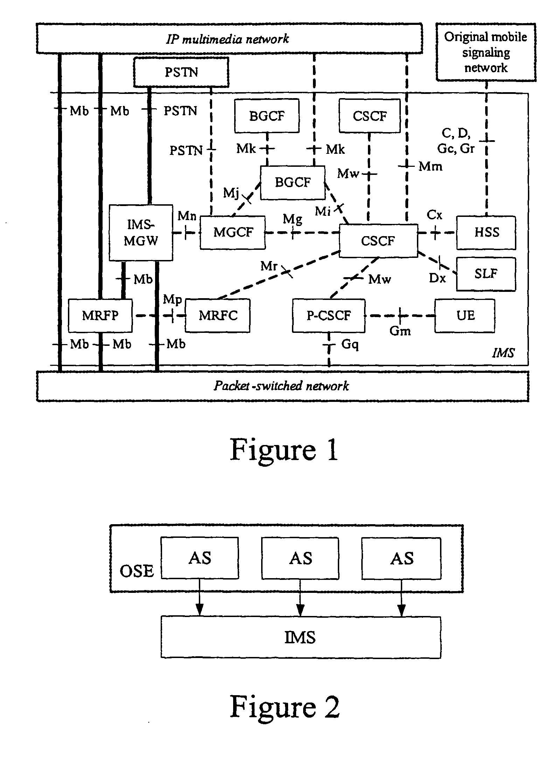

Figure 1 is a schematic diagram illustrating an IMS architecture. As shown in Figure 1, the IMS is set on a Packet-Switched (PS) network, and consists of a Call Session Control Function (CSCF), a Media Gateway Control Function (MGCF), a Multimedia Resource Function (MRF), a Home Subscriber Server (HSS) and other functional entities. The CSCF may be further divided into three logical entities, i.e., a Serving-CSCF (S-CSCF), a Proxy-CSCF (P-CSCF) and an Interrogating-CSCF (I-CSCF), according to their different functionalities. The S-CSCF is a service switching center of the IMS, and implements session control, session state maintenance, user information management, charging information generation, etc. The P-CSCF is an access point for User Equipment (UE) to access the IMS. It performs user registration, Quality of Service (QoS) control, security management, etc. The I-CSCF implements route discovery, e.g. the inter-connection inside and outside the IMS domain. The I-CSCF also manages the assignment of the S-CSCF, hides the topology and configuration of the IMS network towards external networks and other IMS domains, generates charging information, etc. The MGCF acts as a control gateway, implementing an inter-connection between the IMS network and other networks. The MRF provides media resources, e.g. audio receiving/playing, coding/decoding information transmitted between terminals, multimedia conference bridge, etc., and includes a Multimedia Resource Function Controller (MRFC) and a Multimedia Resource Function Processor (MRFP). The HSS stores subscription data and configuration information of users in the IMS network. And Session Initiation Protocol (SIP) is adopted in the IMS.

Figure 2 is a schematic diagram illustrating information interaction between the OSE and the IMS. As shown in Figure 2, the OSE mainly consists of multiple AS-s. An AS currently defined in the OMA includes a Push to talk over Cellular (PoC) Server, a Presence Server providing user state, a Group List Management Server (GLMS) capable of group information storage and inquiry, a Device Management (DM) Server, etc. These AS-s together with related supporting system, such as charging entity, network management entity, etc., form the OSE. The main functions of the IMS include service ability, supporting ability and general abilities. The service ability further includes session management, user data storage and access, event subscribing and notification, message, conference, etc. The supporting ability includes charging, etc. The general abilities include security connection, authentication, authorization, routing, etc. Acting as an upper layer of the IMS, the OSE utilizes these abilities provided by the IMS. The OMA is responsible for the definition of the OSE and presenting requirements to the IMS. The 3GPP is responsible for the definition of the IMS and the interfaces between the IMS and the OSE, including ISC interface, Sh interface, Dh interface, Ut interface, Ro interface, Rf interface, Gm interface, Mb interface, etc. The ISC is an interface between the AS and the IMS, used for implementing control on IMS to AS call, SIP event subscribing and notification, SIP message, etc. The Sh interface is between the AS and the HSS, used for implementing access and modification on user related data for the AS and modifying subscribed user data. The Dh interface is between the AS and a Service Locator Function (SLF), used for implementing HSS address inquiry for the ASS. The Ut interface is between an OSE client and the AS, used for implementing operation ability for an OSE client to configure the AS user data. The Ro interface is between the AS and an online charging entity, used for implementing real-time charging. The Rf interface is between the AS and an off-line charging entity, used for implementing off-line charging. The Gm interface is between the OSE client and the IMS, used for implementing session function, event subscribing notification, message, etc. The Mb interface is a traffic flow interface between the IMS and the OSE, used for transmitting media stream information.

In practical applications, as to user services, multiple AS-s may be combined together. For example, several game servers are combined through a conference processing server to provide online game for a user. Thus, information interactions are needed among the AS-s. Routing mechanisms for user-to-user, user-to-AS, AS-to-user routes have so far been specified by the IMS. However, the IMS requires the AS have a Service Capability Interaction Manager (SCIM) for AS-to-AS routing, i.e., the IMS supposes that the OSE provides an AS-to-AS routing mechanism.

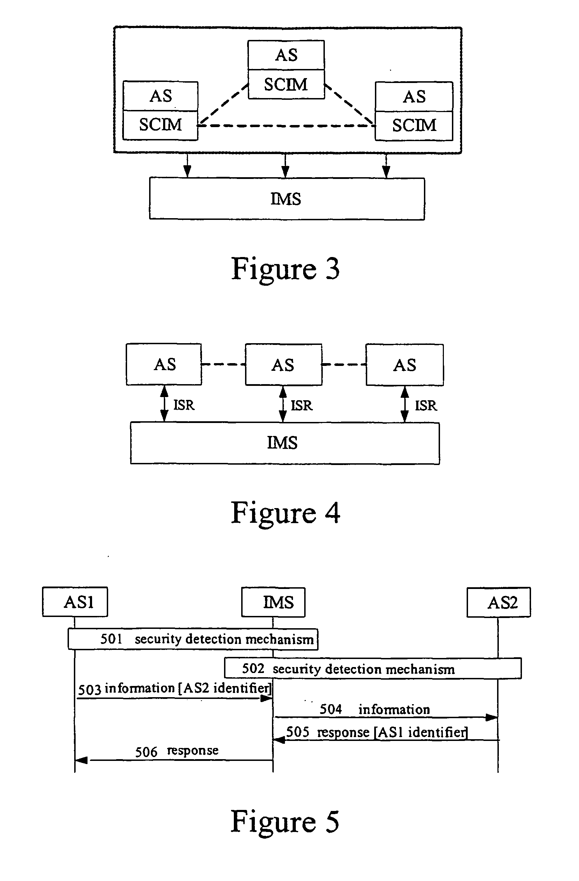

Figure 3 is a schematic diagram illustrating information interaction between AS-s defined in 3GPP. As shown in Figure 3, when the AS-s interact with each other, the AS providing services interacts with other AS-s through the SCIM which is an entity implementing information interaction between AS-s defined in 3GPP. The dotted lines in Figure 3 represent the interface used for interaction between the AS-s through the SCIM. The real lines in Figure 3 represent the interfaces between the OSE and the IMS, such as the ISC interface, Sh interface, Dh interface, etc. The 3GPP incorporates the SCIM into the scope of AS, and it does not define any implementation about the procedure between the SCIM and the AS.

It may be seen from the above description that an SCIM is necessary to be set in the OSE for information interaction between the AS-s, which complicated the AS and the network structure of the service layer and leads to the need of a routing-related server on the service layer, resulting in high cost of network construction and maintenance.

WO2004/034719 discloses providing a presence service in a communication system, and discloses a communication method of providing a presence service in a communication system. US2004/037407 relates to call conferencing, and aims at efficiently setting up and caring on economic call session conferencing.

### Summary of the Invention

The embodiments of the present invention provide a method and a system for implementing communications between Application Servers (AS-s) to implement information interaction between AS-s.

The present invention provides, a method for implementing communications between AS-s comprising:
obtaining, by an IP Multimedia Subsystem, IMS, an identifier of a second AS according to a message sent by a first AS;
sending the message to the second AS according to the identifier of the second AS and returning a response from the second AS to the first AS according to an identifier of the first AS; and
intercommunicating information between the first AS and the second AS via the IMS.

A corresponding system for implementing communications between AS-s, comprises:
an IP Multimedia Subsystem (IMS), configured to connected to a first AS and a second AS, and configured to obtain an identifier of the second AS according to a message sent by the first AS, send the message to the second AS according to the identifier of the second AS, and return a response from the second AS to the first AS according to an identifier of the first AS and
the first AS and the second AS, configured to intercommunicate information between the first AS and the second AS via the IMS.

According to the solution disclosed by embodiments of the present invention, by utilizing the routing function of the IMS, it is possible for the AS-s to establish an information interaction tunnel through a function in the IMS, thereby implementing information interaction between AS-s, and further implementing information sharing and cooperation among multiple AS-s to simplify the network structure of the service layer and improve service providing ability of the OSE. The solution disclosed by the embodiments of the present invention makes the information interaction between AS-s efficient and simple, decreases the complexity of the information interaction between AS-s, and avoids complex searching and judging procedures, thereby saving network resources. And it is more flexible for operators to dispose networks and improve network ability of the IMS at the same time.

### Brief Description of the Drawings

Figure 1 is a schematic diagram illustrating, conventional IMS architecture;
Figure 2 is a schematic diagram illustrating conventional information interaction between the OSE and the IMS;
Figure 3 is a schematic diagram illustrating conventional information interaction between AS-s defined in 33GPP;
Figure 4 is a schematic diagram illustrating information interaction between AS-s according to an embodiment of the present invention;
Figure 5 is a schematic diagram illustrating information interaction between AS-s through an IMS function according to an embodiment of the present invention;
Figure 6 is a flowchart of establishing a session between the AS and the S-CSCF according to an embodiment of the present invention;
Figure 7 is a flowchart of establishing a session between AS1 and AS2 according to an embodiment of the present invention;
Figure 8 is a schematic diagram illustrating non-session-based information interaction between AS-s according to a first embodiment of the present invention;
Figure 9 is a schematic diagram illustrating non-session-based information interaction between AS-s according to a second embodiment of the present invention;
Figure 10 is schematic diagram illustrating non-session-based information interaction between AS-s according to a third embodiment of the present invention; and
Figure 11 is a flowchart of direct information interaction between AS-s according to an embodiment of the present invention.

### Detailed Description of the Invention

The present invention will be described in detail hereinafter with reference to the accompanying drawings and embodiments.

In embodiments of the present invention, information interaction channels between AS-s are implemented through a functional entity in the IMS using the routing function of the IMS, thereby realizing information sharing and cooperation of multiple AS-s, simplifying the network structure of the service layer and enhancing the service providing ability of the OSE.

Figure 4 is a schematic diagram illustrating information interaction between AS-s according to an embodiment of the present invention. As shown in Figure 4, since the AS is used not only by the user but also by other AS-s, a reasonable information interaction method should be provided for the AS, thereby ensuring the information sharing between the AS-s. The dotted lines in Figure 4 denote logical interfaces between the AS-s. Before the information interaction between the AS-s, an information interaction channel should be established through SIP signaling of IP Multimedia Service Routing (ISR) represented by the bi-direction arrows in Figure 4. The channel may be a transmission network between the AS-s, e.g. IP network, Asynchronous Transfer Mode (ATM) network, etc. The channel may also be a channel between the AS and an IMS function, in other words, the AS-s interact with each other through an IMS function, e.g., SIP Message, etc.

Figure 5 is a schematic diagram illustrating information interaction between AS-s through an IMS function. As shown in Figure 5, the information interaction process between the AS-s through an IMS function includes the following steps:
Steps 501∼ 502, to ensure the security of the communication, a security detection mechanism may be added between the AS and the IMS function. For example, mutual authentications may be performed between the AS1 and the IMS function as well as between the AS2 and the IMS function. If the mutual authentications succeed, continue with the subsequent information interaction.
Steps 503~ 504, the AS1 sends information carrying an identifier of the AS2 to the IMS function. The IMS function forwards the received information to the AS2 according to the identifier of the AS2.
Steps 505~ 506, after receiving the information, the AS2 sends a response carrying an identifier of the AS1 to the IMS function. The IMS function forwards the received response to the AS1 according to the identifier of the AS1, notifying the AS1 that the information has been successfully received by the AS2.

Since the structure of the IMS is rather complicated and it has a large number of network elements and interfaces, the information interaction between the AS-s may be implemented through different network elements, e.g. the CSCF, the SLF, the MGCF, the BGCF, the MRF, etc., in the IMS according the positions of the AS-s. As the information interaction methods through different network elements in the IMS are basically the same, the CSCF are taken as an example to describe the detailed implementation hereinafter.

There are generally two methods to implement information interaction between the AS-s. One is session-based information interaction. The other is non-session-based information interaction.

The session-based information interaction refers to information interaction through an established session. Before establishing a session and implementing information interaction between the AS-s through the IMS routing ability, the AS needs to access the IMS and establish a session with an IMS function. The AS may establish a session with an IMS function through a registration in the IMS function.

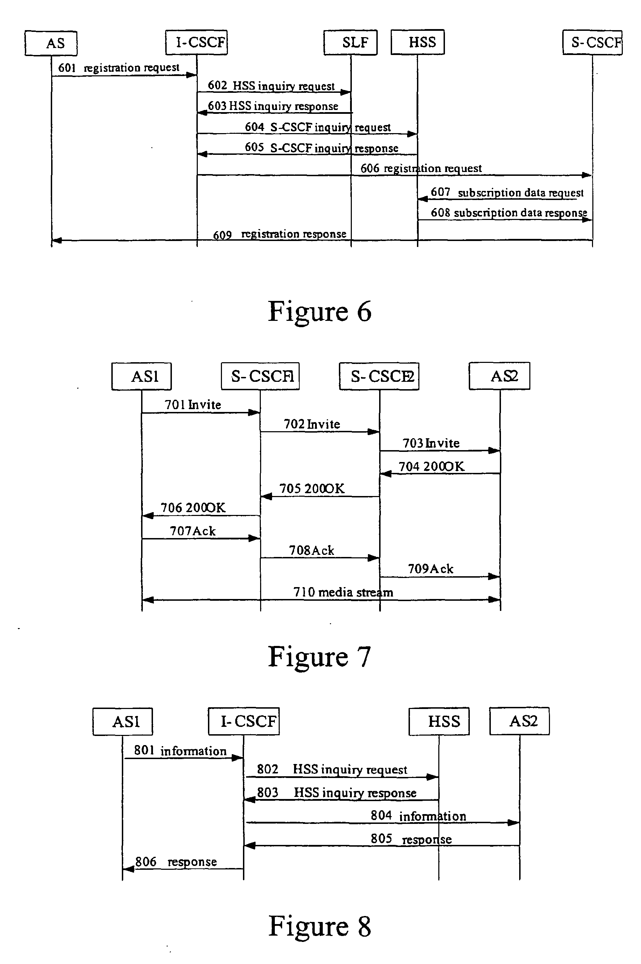

Figure 6 is a flowchart of session establishment between the AS and the S-CSCF. As shown in Figure 6, the session establishment between the AS and the S-CSCF includes the following steps:
Steps 601~ 603, the AS sends a registration request carrying the identifier of the AS itself to the I-CSCF. After receiving the registration request, the I-CSCF sends an HSS inquiry request carrying the identifier of the AS to the SLF, inquiring about the HSS where the data corresponding to the AS are located, i.e., the HSS that the AS has subscribed to. After receiving the HSS inquiry request, the SLF looks for the HSS that stores the data corresponding to the AS according to the identifier of the AS, and then returns an HSS inquiry response carrying the address information of the HSS to the I-CSCF.
Steps 604~ 605, after receiving the HSS inquiry response, the I-CSCF sends an S-CSCF inquiry request carrying the identifier of the AS to the HSS according to the address information of the HSS. After receiving the S-CSCF inquiry request, the HSS obtains the ability information of S-CSCF requested by the AS according to the subscription data of the AS, and then determines an S-CSCF that may meet the requirement on the ability information, returns an S-CSCF inquiry response carrying the address information of the S-CSCF to the I-CSCF.
Steps 606~ 608, after receiving the S-CSCF inquiry response, the I-CSCF sends a registration request carrying the identifier of the AS to the S-CSCF according to the address information of the S-CSCF. After receiving the registration request, the S-CSCF sends a subscription data request carrying the identifier of the AS to the HSS according to the identifier of the AS. After receiving the subscription data request, the HSS looks for the subscription data corresponding to the AS according to the identifier of the AS and returns a subscription data response carrying the identifier of the AS and the subscription data to the S-CSCF. If the HSS does not allow session establishment between the AS and the S-CSCF, the HSS directly returns a subscription data response carrying a corresponding identifier to the S-CSCF. Then the S-CSCF rejects the session establishment, i.e., rejects the registration of the AS.
Step 609, the S-CSCF sends a registration response to the corresponding AS according to the identifier of the AS, notifying the AS whether the registration is allowed.

In addition, the address information of the S-CSCF may be configured in the AS in advance. Thus, the AS may directly establish a session with the configured S-CSCF, and the above mentioned steps for registration may be omitted.

Figure 7 is a flowchart of session establishment between the AS1 and the AS2. As shown in Figure 7, the AS1 and the S-CSCF1 have established a session, and the AS2 and the S-CSCF2 have established a session. In an SIP-based scenario, the session establishment between the AS1 and the AS2 includes the following steps:
Steps 701~ 703, the AS1 sends an Invite message carrying the identifier of the AS2 to the S-CSCF1. After receiving the Invite message, the S-CSCF1 sends an Invite message carrying the identifier of the AS2 to the S-CSCF2. After receiving the Invite message, the S-CSCF2 sends an Invite message to the AS2.

The S-CSCF1 may obtain the address information of the S-CSCF2 through the I-CSCF, i.e., the S-CSCF1 provides the identifier of the AS2 for the I-CSCF, to request the address information of the S-CSCF2 from the I-CSCF. The I-CSCF requests the HSS or the DNS to inquiries about the S-CSCF2 corresponding to the AS2. The HSS or the DNS returns the address information of the S-CSCF2, thereby obtaining the address information of the S-CSCF2.

Steps 704∼ 706, after receiving the Invite message, the AS2 returns a 200 OK response carrying the identifier of the AS1 to the S-CSCF2. After receiving the 200 OK response, the S-CSCF2 returns a 200 OK response carrying the identifier of the AS1 to the S-CSCF1 according to the identifier of the AS 1. After receiving the 200 OK response, the S-CSCF1 returns a 200 OK response to the AS1 according to the identifier of the AS 1.

Steps 707∼ 709, after receiving the 200 OK response, the AS1 returns an Ack carrying the identifier of the AS2 to the S-CSCF1. After receiving the Ack, the S-CSCF1 returns an Ack carrying the identifier of the AS2 to the S-CSCF2 according to the identifier of the AS 1. Upon receiving the Ack, the S-CSCF2 returns an Ack to the AS2 according to the identifier of the AS2.

Step 710, after the forgoing steps, a session has been established between the AS1 and the AS2. Thus, the AS1 and the AS2 may transmit media streams between them. For example, the AS1 sends media stream information carrying the identifier of the AS2 to the S-CSCF1. After receiving the media stream information, the S-CSCF1 forwards the media stream information carrying the identifier of the AS2 to the S-CSCF2. After receiving the media stream information, the S-CSCF2 sends the media stream information to the AS2 according to the identifier of the AS2.

During the above procedure, QoS parameters may be transmitted between the AS1 and the AS2 through the S-CSCF1 and the S-CSCF2 to negotiate a QoS policy. After negotiation of the QoS parameters, the transmission quality of the media stream between the AS1 and the AS2 will not fall below the negotiated QoS parameters.

In the foregoing session-based information interaction, the AS-s interact with each other through the IMS function, which makes full use of the routing function of the IMS. In addition, the transmission quality between the AS-s may be negotiated to establish a corresponding session as required. When there is no negotiation, a simple session of a fixed QoS may be established.

Non-session-based information interaction refers to information interaction between the AS-s not based on an established session. Instead, such interaction is directly forwarded by an IMS function. In the case of non-session-based information interaction, the information interacted between the AS-s is mainly common information, e.g., message. If the information is media stream information, manually configured QoS parameters are required.

To ensure the security of the communication, a security detection mechanism may be added between the AS and the IMS function. For example, mutual authentications may be performed between the AS1 and the IMS function as well as between the AS2 and the IMS function. If the mutual authentications succeed, continue with the subsequent information interaction.

Figure 8 shows a schematic diagram illustrating non-session-based information interaction between AS-s according a first embodiment of the present invention. As shown in Figure 8, the non-session-based information interaction includes the following steps:
Steps 801~ 803, the AS1 sends information carrying the identifier of the AS2 to the I-CSCF. After receiving the information, the I-CSCF sends an HSS inquiry request carrying the identifier of the AS2 to the HSS according to the identifier of the AS2. After receiving the HSS inquiry request, the HSS looks for the address information of the AS2 and relevant subscription data of the AS2 according to the identifier of the AS2, and returns an HSS inquiry response to the I-CSCF.
Steps 804∼ 806, after receiving the HSS inquiry response, the I-CSCF sends information to the AS2 according to the address information of the AS2. After receiving the information, the I-CSCF returns a response carrying the identifier of the AS1 to the I-CSCF. After receiving the response, the I-CSCF returns a response to the AS1 according to the identifier of the AS1, notifying the AS1 that the information has been successfully received by the AS2.

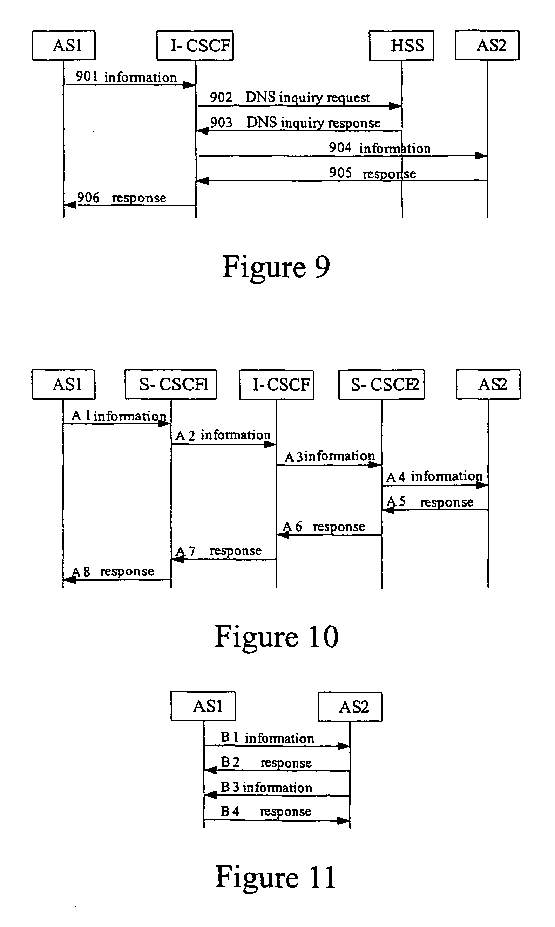

Figure 9 is a schematic diagram illustrating non-session-based information interaction between AS-s according to a second embodiment of the present invention. As shown in Figure 9, the non-session-based information interaction between the AS-s includes the following steps:
Steps 901~ 903, the AS1 sends information carrying the identifier of the AS2 to the I-CSCF. After receiving the information, the I-CSCF sends a DNS inquiry request carrying the identifier of the AS2 to the DNS according to the identifier of the AS2. After receiving the DNS inquiry request, the DNS looks for the address information of the AS2 and relevant subscription data of the AS2 according to the identifier of the AS2, and returns a DNS inquiry response to the I-CSCF.
Steps 904∼ 906, after receiving the DNS inquiry response, the I-CSCF sends information to the AS2 according to the identifier of the AS2. After receiving the information, the AS2 sends response carrying the identifier of the AS1 to the I-CSCF. After receiving the response, the I-CSCF returns a response to the AS1 according to the AS1, notifying the AS1 that the information has been successfully received by the AS2.

Figure 10 is a schematic diagram illustrating non-session-based information interaction between AS-s according to a third embodiment of the present invention. As shown in Figure 10, the non-session-based information interaction between the AS-s includes the following steps:
Steps A1∼ A4: The AS1 sends information carrying the identifier of the AS2 to the S-CSCF. After receiving the information, the S-CSCF sends information carrying the identifier of the AS2 to the I-CSCF. After receiving the information, the I-CSCF sends information carrying the identifier of the AS2 to the S-CSCF2. After receiving the information, the S-CSCF2 sends information to the AS2 according to the identifier of the AS2.

The I-CSCF may request the HSS or the DNS to inquire about the S-CSCF2 corresponding to the AS2, and the HSS or the DNS returns the address information of the S-CSCF2, such that the address information of the S-CSCF2 could be obtained.

Steps A5∼ A8, after receiving the information, the AS2 returns a response carrying the identifier of the AS1 to the S-CSCF2. After receiving the response, the S-CSCF2 returns a response carrying the identifier of the AS1 to the I-CSCF. After receiving the response, the I-CSCF returns a response carrying the identifier of the AS1 to the S-CSCF1. After receiving the response, the S-CSCF1 returns a response to the AS1 according to the identifier of the AS1, notifying the AS1 that the information has been successfully received.

The address information of the IMS function involved in the above mentioned non-session-based information interaction between AS-s may be pre-configured in the corresponding AS. Thus, when the AS needs to interact with another AS, it may directly send the information to be interacted to the configured corresponding IMS function, then the IMS function sends the information to the other AS.

In addition, the IMS function may also act as a trigger point of an appropriate service. For example, when receiving a triggering message, the IMS function sends information to the corresponding AS according to the configured trigger condition. The AS returns an operation command, such as generating charging information, etc., to the IMS function. In other words, when the AS-s interact with each other through the IMS function, the IMS function may trigger a third AS according to the trigger condition. The trigger condition may be configured in the IMS function, or configured in the HSS and the IMS function obtains the trigger condition through interaction with the HSS.

The IMS may generate charging information for the information interaction between the AS-s which is implemented through the IMS itself according to the configuration of the operator.

In addition, when the AS-s interact with each other after the establishment of a session between the AS-s, the information interaction may be implemented directly through the transmission network between the AS-s without involving the IMS function, as shown in Figure 11.

Steps B1∼ B2, the AS1 sends information to the AS2 through the transmission network; after receiving the information, the AS2 returns a response to the AS 1, notifying the AS1 that the information has been received by the AS2.

Steps B3∼ B4, the AS2 sends information to the AS1 through the transmission network; after receiving the information, the AS1 returns a response to the AS2, notifying that the information has been received by the AS2.

There is no fixed executing order between Step B1∼step B2 and step B3∼step B4.

Before the information interaction between the AS1 and the AS2, they may directly send a QoS parameter to negotiate QoS policy. After determining the QoS parameter, the transmission quality of the media stream between the AS1 and the AS2 will not fall below the negotiated QoS parameter.

In the foregoing description, only the information interaction between two AS-s is taken as examples. In practical applications, the information interaction may be performed among multiple AS-s, i.e., multiple AS-s interact with each other through an IMS function. The detailed implementation is basically the same as that mentioned above, which will not be repeated herein.

Though the present invention has been illustrated and described by some preferred embodiments, those skilled in the art should understand that various changes may be made in form and detail without departing from the scope of the present invention and therefore should be covered in the protection scope of the present invention defined by the appended claims and its equivalents.

## Claims

1. A method for implementing communications between Application Servers (AS-s), **characterized by** comprising:
obtaining, by an IP Multimedia Subsystem, IMS, an identifier of a second AS according to a message sent by a first AS;
sending the message to the second AS according to the identifier of the second AS and returning a response from the second AS to the first AS according to an identifier of the first AS; and
intercommunicating information between the first AS and the second AS via the IMS.

2. The method of claim 1, wherein the establishing the route between the first AS and the second AS through the IMS based on the identifier of the second AS comprises:
establishing a session between the IMS and the first AS, and establishing a session between the IMS and the second AS.

3. The method of claim 2, wherein the IMS comprises an Interrogating-Call Session Control Function, I-CSCF, a Serving-CSCF, S-CSCF, a Home Subscriber Server, HSS, and
the establishing the session between the IMS and the first AS comprises:
sending, by the first AS, a registration request to the I-CSCF;
acquiring (602~605), by the I-CSCF, address information of the S-CSCF through the HSS, the first AS subscribing to the HSS, and forwarding (606) the registration request to the S-CSCF; and
responding (607~609), by the S-CSCF, to the registration request and establishing a session with the first AS;
the establishing the session between the second AS and the IMS comprises:
receiving(601), by the I-CSCF a registration request from the second AS;
acquiring (602~605), by the I-CSCF, address information of the S-CSCF through the HSS, the second AS subscribing to the HSS, and forwarding(606) the registration request to the S-CSCF; and
responding (607~609), by the S-CSCF, to the registration request and establishing a session with the second AS.

4. The method of claim 3, wherein the acquiring, by the I-CSCF, the address information of the S-CSCF through the HSS, comprises:
acquiring (602, 603) the address information of the HSS, through a Service Location Function, SLF, and acquiring (604, 605) the address information of the S-CSCF through the HSS.

5. The method of claim 3, wherein the responding to the registration request and establishing the session between the first AS and the S-CSCF comprises:
acquiring (607, 608) subscription data of the first AS through the HSS, returning (609) a registration response to the first AS and establishing the session with the first AS;
responding to the registration request and establishing the session with the second AS by the S-CSCF comprises:
acquiring (607, 608) subscription data of the second AS through the HSS, retuming(609) a registration response to the second AS and establishing the session with the second AS.

6. The method of claim 1, further comprising:
configuring address information of the IMS in the first AS and second AS.

7. The method of claim 1 or 6, wherein the IMS comprises a first S-CSCF and a second S-CSCF, and
the sending the message to the second AS according to the identifier of the second AS and returning a response from the second AS to the first AS according to an identifier of the first AS comprises:
sending, by the first AS, a session establishment request carrying an identifier of the second AS to the first S-CSCF;
forwarding, by the first S-CSCF, the session establishment request carrying the identifier of the second AS to the second S-CSCF; and
upon receiving the session establishment request, returning, by the second AS, a session establishment response through the first S-CSCF and the second S-CSCF to establish a session with the first AS.

8. The method of claim 7, wherein the forwarding, by the first S-CSCF, the session establishment request carrying the identifier of the second AS to the second S-CSCF comprises:
acquiring, by the first S-CSCF, address information of the second S-CSCF through an inquiry entity, and forwarding the session establishment request carrying the identifier of the second AS to the second S-CSCF according to the address information of the second S-CSCF.

9. The method of claim 8, wherein the acquiring, by the first S-CSCF, the address information of the second S-CSCF through the inquiry entity comprises:
providing, by the first S-CSCF, the identifier of the second AS to an I-CSCF; and
receiving, by the first S-CSCF, the address information of the second S-CSCF which is obtained through a Domain Name Server, DNS, or a HSS, the second AS subscribing to the HSS.

10. The method of claim 2, further comprising:
performing (501) a security detection between the first AS and the IMS; if the security detection succeeds, establishing the session between the first AS and the IMS; and
performing (502), a security detection between the second AS and the IMS; if the security detection succeeds, establishing the session between the second AS and the IMS.

11. The method of claim 2, wherein the intercommunicating the information between the first AS and the second AS via the route established comprises:
communicating the information between the first AS and the second AS via the route established through the IMS; or
communicating the information between the first AS and the second AS via the route established through a transmission network.

12. The method of any one of claims 1 to 11, further comprising:
negotiating a Quality of Service, QoS, policy between the first AS and the second AS through the IMS and determining a QoS parameter.

13. The method of claim 1 or 2, wherein the IMS comprise an I-CSCF and a HSS,
and
the sending the message to the second AS according to the identifier of the second AS comprises:
sending (801), by the first AS, information carrying an identifier of the second AS to the I-CSCF; and
acquiring (802, 803), by the I-CSCF, address information of the second AS through the HSS, the second AS subscribing to the HSS, according to the identifier of the second AS, and forwarding (804) the information to the second AS.

14. The method of claim 1, wherein the IMS comprise an I-CSCF and a DNS, and the sending the message to the second AS according to the identifier of the second AS comprises:
sending (901), by the first AS, information carrying an identifier of the second AS to the I-CSCF; and
acquiring (902, 903), by the I-CSCF, address information of the second AS through the DNS according to the identifier of the second AS, and
forwarding (904) the information to the second AS.

15. The method of claim 14, wherein the forwarding, by the first S-CSCF, the information carrying the identifier of the second AS to the second S-CSCF comprises:
acquiring address information of the second S-CSCF through an inquiry entity and forwarding the information carrying the identifier of the second AS to the second S-CSCF according to the address information of the second S-CSCF.

16. The method of any one of claims 1 to 15, further comprising:
configuring a triggering condition, and
triggering the message to a third AS if the triggering condition is met.

17. A system for implementing communications between Application Servers (ASs), **characterized by** comprising:
an IP Multimedia Subsystem, IMS, configured to connected to a first AS and a second AS, and configured to obtain an identifier of the second AS according to a message sent by the first AS, send the message to the second AS according to the identifier of the second AS, and return a response from the second AS to the first AS according to an identifier of the first AS; and
the first AS and the second AS, configured to intercommunicate information between the first AS and the second AS via the IMS.

18. The system of claim 17, wherein the IMS comprises an I-CSCF and a HSS,
the I-CSCF is configured to receive the message carrying the identifier of the second AS from the first AS, acquire address information of the second AS through the HSS, the second AS subscribing to the HSS, according to the identifier of the second AS, and forward the message to the second AS.

19. The system of claim 17, wherein the IMS comprises an I-CSCF and a DNS,
the I-CSCF is configured to receive the message carrying the identifier of the second AS from the first AS, acquire address information of the second AS through the DNS according to the identifier of the second AS, and forward the message to the second AS.

20. The system of claim 17, wherein the IMS comprises a first S-CSCF and a second S-CSCF,
the first S-CSCF is configured to receive the message carrying the identifier of the second AS to from the first AS, and forward the message carrying the identifier of the second AS to the second S-CSCF;
the second S-CSCF is configured to receive the message from the first S-CSCF and forward the message to the second AS.

## Patentansprüche

1. Verfahren zum Implementieren einer Kommunikation zwischen Anwendungsservern (AS-s), **dadurch gekennzeichnet, dass** es Folgendes umfasst:
Erhalten durch ein IP-Multimedia-Untersystem IMS eines Identifizierers eines zweiten AS in Übereinstimmung mit einer durch einen ersten AS gesendeten Nachricht;
Senden der Nachricht an den zweiten AS in Übereinstimmung mit dem Identifizierer des zweiten AS und Zurückschicken einer Antwort von dem zweiten AS zu dem ersten AS in Übereinstimmung mit einem Identifizierer des ersten AS; und
wechselseitiges Übertragen von Informationen zwischen dem ersten AS und dem zweiten AS über das IMS.

2. Verfahren nach Anspruch 1, wobei das Herstellen des Weges zwischen dem ersten AS und dem zweiten AS durch das IMS basierend auf dem Identifizierer des zweiten AS Folgendes umfasst:
Herstellen einer Sitzung zwischen dem IMS und dem ersten AS und Herstellen einer Sitzung zwischen dem IMS und dem zweiten AS.

3. Verfahren nach Anspruch 2, wobei das IMS eine Anfrage-Anrufsitzungssteuerfunktion I-CSCF, eine Dienst-CSCF S-CSCF und einen Heimteilnehmer-Server HSS umfasst, und
das Herstellen der Sitzung zwischen dem IMS und dem ersten AS Folgendes umfasst:
Senden durch den ersten AS einer Registrierungsanforderung an die I-CSCF;
Erfassen (602~605) durch die I-CSCF von Adresseninformationen der S-CSCF durch den HSS, wobei der erste AS den HSS abonniert, und Weiterleiten (606) der Registrierungsanforderung an die S-CSCF; und
Antworten (607~609) durch die S-CSCF auf die Registrierungsanforderung und Herstellen einer Sitzung mit dem ersten AS;
wobei das Herstellen der Sitzung zwischen dem zweiten AS und dem IMS Folgendes umfasst:
Empfangen (601) durch die I-CSCF einer Registrierungsanforderung von dem zweiten AS;
Erfassen (602~605) durch die I-CSCF von Adresseninformationen der S-CSCF durch den HSS, wobei der zweite AS den HSS abonniert, und Weiterleiten (606) der Registrierungsanforderung an die S-CSCF; und
Antworten (607~609) durch die S-CSCF auf die Registrierungsanforderung und Herstellen einer Sitzung mit dem zweiten AS.

4. Verfahren nach Anspruch 3, wobei das Erfassen durch die I-CSCF der Adresseninformationen der S-CSCF durch den HSS Folgendes umfasst:
Erfassen (602, 603) der Adresseninformationen des HSS durch eine Dienstortfunktion SLF und Erfassen (604, 605) der Adresseninformationen der S-CSCF durch den HSS.

5. Verfahren nach Anspruch 3, wobei das Antworten auf die Registrierungsanforderung und das Herstellen der Sitzung zwischen dem ersten AS und der S-CSCF Folgendes umfasst:
Erfassen (607, 608) von Abonnementdaten des ersten AS durch den HSS, Zurückschicken (609) einer Registrierungsanforderung an den ersten AS und Herstellen der Sitzung mit dem ersten AS;
wobei das Antworten auf die Registrierungsanforderung und das Herstellen der Sitzung mit dem zweiten AS durch die S-CSCF Folgendes umfasst:
Erfassen (607, 608) von Abonnementdaten des zweiten AS durch den HSS, Zurückschicken (609) einer Registrierungsantwort an den zweiten AS und Herstellen der Sitzung mit dem zweiten AS.

6. Verfahren nach Anspruch 1, das ferner Folgendes umfasst:
Konfigurieren von Adresseninformationen des IMS in dem ersten AS und in dem zweiten AS.

7. Verfahren nach Anspruch 1 oder 6, wobei das IMS eine erste S-CSCF und eine zweite S-CSCF umfasst, und
wobei das Senden der Nachricht an den zweiten AS in Übereinstimmung mit dem Identifizierer des zweiten AS und das Zurückschicken einer Antwort von dem zweiten AS zu dem ersten AS in Übereinstimmung mit einem Identifizierer des ersten AS Folgendes umfasst:
Senden durch den ersten AS einer Sitzungsherstellungsanforderung, die einen Identifizierer des zweiten AS trägt, an die erste S-CSCF;
Weiterleiten durch die erste S-CSCF der Sitzungsherstellungsanforderung, die den Identifizierer des zweiten AS trägt, an die zweite S-CSCF; und
beim Empfang der Sitzungsherstellungsanforderung Zurückschicken durch den zweiten AS einer Sitzungsherstellungsantwort durch die erste S-CSCF und die zweite S-CSCF, um eine Sitzung mit dem ersten AS herzustellen.

8. Verfahren nach Anspruch 7, wobei das Weiterleiten durch die erste S-CSCF der Sitzungsherstellungsanforderung, die den Identifizierer des zweiten AS trägt, zur zweiten S-CSCF Folgendes umfasst:
Erfassen durch die erste S-CSCF von Adresseninformationen der zweiten S-CSCF durch eine Abfrageentität und Weiterleiten der Sitzungsherstellungsanforderung, die den Identifizierer des zweiten AS trägt, zur zweiten S-CSCF in Übereinstimmung mit den Adresseninformationen der zweiten S-CSCF.

9. Verfahren nach Anspruch 8, wobei das Erfassen durch die erste S-CSCF der Adresseninformationen der zweiten S-CSCF durch die Abfrageentität Folgendes umfasst:
Bereitstellen durch die erste S-CSCF des Identifizierers des zweiten AS einer I-CSCF; und
Empfangen durch die erste S-CSCF der Adresseninformationen der zweiten S-CSCF, die durch einen Domänennamenserver DNS oder einen HSS erhalten werden, wobei der zweite AS den HSS abonniert.

10. Verfahren nach Anspruch 2, das ferner Folgendes umfasst:
Ausführen (501) einer Sicherheitsdetektion zwischen dem ersten AS und dem IMS; und, falls die Sicherheitsdetektion Erfolg hat, Herstellen der Sitzung zwischen dem ersten AS und dem IMS; und
Ausführen (502) einer Sicherheitsdetektion zwischen dem zweiten AS und dem IMS; und, falls die Sicherheitsdetektion Erfolg hat, Herstellen der Sitzung zwischen dem zweiten AS und dem IMS.

11. Verfahren nach Anspruch 2, wobei das wechselseitige Übertragen von Informationen zwischen dem ersten AS und dem zweiten AS über den hergestellten Weg Folgendes umfasst:
Übertragen der Informationen zwischen dem ersten AS und dem zweiten AS über den durch das IMS hergestellten Weg; oder
Übertragen der Informationen zwischen dem ersten AS und dem zweiten AS über den durch ein Übertragungsnetz hergestellten Weg.

12. Verfahren nach einem der Ansprüche 1 bis 11, das ferner Folgendes umfasst:
Verhandeln einer Dienstqualität-Strategie, QoS-Strategie, zwischen dem ersten AS und dem zweiten AS durch das IMS und Bestimmen eines QoS-Parameters.

13. Verfahren nach Anspruch 1 oder 2, wobei das IMS eine I-CSCF und einen HSS umfasst, und
das Senden der Nachricht zu dem zweiten AS in Übereinstimmung mit dem Identifizierer des zweiten AS Folgendes umfasst:
Senden (801) durch den ersten AS von Informationen, die einen Identifizierer des zweiten AS tragen, an die I-CSCF; und
Erfassen (802, 803) durch die I-CSCF von Adresseninformationen des zweiten AS durch den HSS, wobei der zweite AS den HSS abonniert, in Übereinstimmung mit dem Identifizierer des zweiten AS und Weiterleiten (804) der Informationen zu dem zweiten AS.

14. Verfahren nach Anspruch 1, wobei das IMS eine I-CSCF und einen DNS umfasst und
das Senden der Nachricht an den zweiten AS in Übereinstimmung mit dem Identifizierer des zweiten AS Folgendes umfasst:
Senden (901) durch den ersten AS von Informationen, die einen Identifizierer des zweiten AS tragen, an die I-CSCF; und
Erfassen (902, 903) durch die I-CSCF von Adresseninformationen des zweiten AS durch den DNS in Übereinstimmung mit dem Identifizierer des zweiten AS, und
Weiterleiten (904) der Informationen zu dem zweiten AS.

15. Verfahren nach Anspruch 14, wobei das Weiterleiten durch die erste S-CSCF der Informationen, die den Identifizierer des zweiten AS tragen, zur zweiten S-CSCF Folgendes umfasst:
Erfassen von Adresseninformationen der zweiten S-CSCF durch eine Abfrageentität und Weiterleiten der Informationen, die den Identifizierer des zweiten AS tragen, zur zweiten S-CSCF in Übereinstimmung mit den Adresseninformationen der zweiten S-CSCF.

16. Verfahren nach einem der Ansprüche 1 bis 15, das ferner Folgendes umfasst:
Konfigurieren einer Auslösebedingung und
Auslösen der Nachricht zu einem dritten AS, falls die Auslösebedingung erfüllt ist.

17. System zum Implementieren der Kommunikation zwischen Anwendungsservern (AS-s), **dadurch gekennzeichnet, dass** es Folgendes umfasst:
ein IP-Multimedia-Untersystem IMS, das konfiguriert ist, mit einem ersten AS und einem zweiten AS verbunden zu sein, und konfiguriert ist, einen Identifizierer des zweiten AS in Übereinstimmung mit einer durch den ersten AS gesendeten Nachricht zu erhalten, die Nachricht in Übereinstimmung mit dem Identifizierer des zweiten AS zu dem zweiten AS zu senden und eine Antwort von dem zweiten AS in Übereinstimmung mit einem Identifizierer des ersten AS zu dem ersten AS zurückzuschicken; und
den ersten AS und den zweiten AS, die konfiguriert sind, Informationen zwischen dem ersten AS und dem zweiten AS über das IMS wechselseitig zu übertragen.

18. System nach Anspruch 17, wobei das IMS eine I-CSCF und einen HSS umfasst,
wobei die I-CSCF konfiguriert ist, die Nachricht, die den Identifizierer des zweiten AS trägt, von dem ersten AS zu empfangen, Adresseninformationen des zweiten AS durch den HSS, wobei der zweite AS den HSS abonniert, in Übereinstimmung mit dem Identifizierer des zweiten AS zu erfassen, und die Nachricht zu dem zweiten AS weiterzuleiten.

19. System nach Anspruch 17, wobei das IMS eine I-CSCF und einen DNS umfasst,
wobei die I-CSCF konfiguriert ist, die Nachricht, die den Identifizierer des zweiten AS trägt, von dem ersten AS zu empfangen, Adresseninformationen des zweiten AS in Übereinstimmung mit dem Identifizierer des zweiten AS durch den DNS zu erfassen und die Nachricht zu dem zweiten AS weiterzuleiten.

20. System nach Anspruch 17, wobei das IMS eine erste S-CSCF und eine zweite S-CSCF umfasst,
wobei die erste S-CSCF konfiguriert ist, die Nachricht, die den Identifizierer des zweiten AS trägt, von dem ersten AS zu empfangen und die Nachricht, die den Identifizierer der zweiten AS trägt, zu der zweiten S-CSCF zu übertragen, und
die zweite S-CSCF konfiguriert ist, die Nachricht von der ersten S-CSCF zu empfangen und die Nachricht zu dem zweiten AS weiterzuleiten.

## Revendications

1. Procédé de mise en oeuvre de communications entre des Serveurs d'Applications (AS-s, Application Servers), **caractérisé en ce qu'**il comprend :
l'obtention, par un Sous-système Multimédia IP, IMS (IP Multimedia Subsystem), d'un identifiant d'un deuxième AS conformément à un message envoyé par un premier AS ;
l'envoi du message au deuxième AS conformément à l'identifiant du deuxième AS et le renvoi d'une réponse du deuxième AS au premier AS conformément à un identifiant du premier AS ; et
l'échange d'informations entre le premier AS et le deuxième AS via l'IMS.

2. Procédé selon la revendication 1, dans lequel l'établissement de la route entre le premier AS et le deuxième AS par l'intermédiaire de l'IMS sur la base de l'identifiant du deuxième AS comprend :
l'établissement d'une session entre l'IMS et le premier AS, et l'établissement d'une session entre l'IMS et le deuxième AS.

3. Procédé selon la revendication 2, dans lequel l'IMS comprend une Fonction de Contrôle de Session d'Appels d'Interrogation, I-CSCF (Interrogating-Call Session Control Function), une fonction CSCF de Service, S-CSCF (Serving-CSCF), un Serveur d'Abonné Nominal, HSS (Home Subscriber Server), et
l'établissement de la session entre l'IMS et le premier AS comprend :
l'envoi, par le premier AS, d'une demande d'enregistrement à l'I-CSCF ;
l'acquisition (602~605), par l'I-CSCF, d'informations d'adresse de la S-CSCF par l'intermédiaire du HSS, le premier AS s'abonnant au HSS et la réexpédition (606) de la demande d'enregistrement à la S-CSCF ; et
la production d'une réponse (607~609), par la S-CSCF, à la demande d'enregistrement, et l'établissement d'une session avec le premier AS ;
l'établissement de la session entre le deuxième AS et l'IMS comprend :
la réception (601), par l'I-CSCF, d'une demande d'enregistrement en provenance du deuxième AS ;
l'acquisition (602~605), par l'I-CSCF, d'informations d'adresse de la S-CSCF par l'intermédiaire du HSS, le deuxième AS s'abonnant au HSS et la réexpédition (606) de la demande d'enregistrement à la S-CSCF ; et
la production d'une réponse (607∼609), par la S-CSCF, à la demande d'enregistrement et l'établissement d'une session avec le deuxième AS.

4. Procédé selon la revendication 3, dans lequel l'acquisition, par l'I-CSCF, des informations d'adresse de la S-CSCF par l'intermédiaire du HSS, comprend :
l'acquisition (602, 603) des informations d'adresse du HSS par l'intermédiaire d'une Fonction de Localisation de Service, SLF (Service Location Function), et
l'acquisition (604, 605) des informations d'adresse de la S-CSCF par l'intermédiaire du HSS.

5. Procédé selon la revendication 3, dans lequel la production d'une réponse à la demande d'enregistrement et l'établissement de la session entre le premier AS et la S-CSCF comprennent :
l'acquisition (607, 608) de données d'abonnement du premier AS par l'intermédiaire du HSS, le renvoi (609) d'une réponse d'enregistrement au premier AS et
l'établissement de la session avec le premier AS ;
la production d'une réponse à la demande d'enregistrement et l'établissement de la session avec le deuxième AS par la S-CSCF comprennent :
l'acquisition (607, 608) de données d'abonnement du deuxième AS par l'intermédiaire du HSS, le renvoi (609) d'une réponse d'enregistrement au deuxième AS et l'établissement de la session avec le deuxième AS.

6. Procédé selon la revendication 1, comprenant en outre :
la configuration d'informations d'adresse de l'IMS dans le premier AS et le deuxième AS.

7. Procédé selon la revendication 1 ou 6, dans lequel l'IMS comprend une première S-CSCF et une deuxième S-CSCF, et
l'envoi du message au deuxième AS conformément à l'identifiant du deuxième AS et le renvoi d'une réponse du deuxième AS au premier AS conformément à un identifiant du premier AS comprennent :
l'envoi, par le premier AS, d'une demande d'établissement de session acheminant un identifiant du deuxième AS à la première S-CSCF ;
la réexpédition, par la première S-CSCF, de la demande d'établissement de session acheminant l'identifiant du deuxième AS à la deuxième S-CSCF ; et
à la réception de la demande d'établissement de session, le renvoi, par le deuxième AS, d'une réponse d'établissement de session par l'intermédiaire de la première S-CSCF et de la deuxième S-CSCF afin d'établir une session avec le premier AS.

8. Procédé selon la revendication 7, dans lequel la réexpédition, par la première S-CSCF, de la demande d'établissement de session acheminant l'identifiant du deuxième AS à la deuxième S-CSCF comprend :
l'acquisition, par la première S-CSCF, d'informations d'adresse de la deuxième S-CSCF par l'intermédiaire d'une entité d'interrogation, et la réexpédition de la demande d'établissement de session acheminant l'identifiant du deuxième AS à la deuxième S-CSCF conformément aux informations d'adresse de la deuxième S-CSCF.

9. Procédé selon la revendication 8, dans lequel l'acquisition, par la première S-CSCF, des informations d'adresse de la deuxième S-CSCF par l'intermédiaire de l'entité d'interrogation comprend :
la fourniture, par la première S-CSCF, de l'identifiant du deuxième AS à une I-CSCF ; et
la réception, par la première S-CSCF, des informations d'adresse de la deuxième S-CSCF qui sont obtenues par l'intermédiaire d'un Serveur de Noms de Domaines, DNS (Domain Name Server), ou d'un HSS, le deuxième AS s'abonnant au HSS.

10. Procédé selon la revendication 2, comprenant en outre :
l'exécution (501) d'une détection de sécurité entre le premier AS et l'IMS ; si la détection de sécurité réussit, l'établissement de la session entre le premier AS et l'IMS ; et
l'exécution (502) d'une détection de sécurité entre le deuxième AS et l'IMS ; si la détection de sécurité réussit, l'établissement de la session entre le deuxième AS et l'IMS.

11. Procédé selon la revendication 2, dans lequel l'échange des informations entre le premier AS et le deuxième AS via la route établie comprend :
la communication des informations entre le premier AS et le deuxième AS via la route établie par l'intermédiaire de l'IMS ; ou
la communication des informations entre le premier AS et le deuxième AS via la route établie par l'intermédiaire d'un réseau de transmission.

12. Procédé selon l'une quelconque des revendications 1 à 11, comprenant en outre :
la négociation d'une politique de Qualité de Service, QoS (Quality of Service) entre le premier AS et le deuxième AS par l'intermédiaire de l'IMS et la détermination d'un paramètre de QoS.

13. Procédé selon la revendication 1 ou 2, dans lequel l'IMS comprend une I-CSCF et un HSS, et
l'envoi du message au deuxième AS conformément à l'identifiant du deuxième AS comprend :
l'envoi (801), par le premier AS, d'informations acheminant un identifiant du deuxième AS à l'I-CSCF ; et
l'acquisition (802, 803), par l'I-CSCF, d'informations d'adresse du deuxième AS par l'intermédiaire du HSS, le deuxième AS s'abonnant au HSS, conformément à l'identifiant du deuxième AS, et la réexpédition (804) des informations au deuxième AS.

14. Procédé selon la revendication 1, dans lequel l'IMS comprend une I-CSCF et un DNS, et l'envoi du message au deuxième AS conformément à l'identifiant du deuxième AS comprend :
l'envoi (901), par le premier AS, d'informations acheminant un identifiant du deuxième AS à l'I-CSCF ; et
l'acquisition (902, 903), par l'I-CSCF, d'informations d'adresse du deuxième AS par l'intermédiaire du DNS conformément à l'identifiant du deuxième AS, et
la réexpédition (904) des informations au deuxième AS.

15. Procédé selon la revendication 14, dans lequel la réexpédition, par la première S-CSCF, des informations acheminant l'identifiant du deuxième AS à la deuxième S-CSCF comprend :
l'acquisition d'informations d'adresse de la deuxième S-CSCF par l'intermédiaire d'une entité d'interrogation et la réexpédition des informations acheminant l'identifiant du deuxième AS à la deuxième S-CSCF conformément aux informations d'adresse de la deuxième S-CSCF.

16. Procédé selon l'une quelconque des revendications 1 à 15, comprenant en outre :
la configuration d'une condition de déclenchement, et
le déclenchement du message à destination d'un troisième AS si la condition de déclenchement est satisfaite.

17. Système destiné à mettre en oeuvre des communications entre des Serveurs d'Applications (AS), **caractérisé en ce qu'**il comprend :
un Sous-système Multimédia IP, IMS, configuré pour être connecté à un premier AS et à un deuxième AS, et configuré pour obtenir un identifiant du deuxième AS conformément à un message envoyé par le premier AS, pour envoyer le message au deuxième AS conformément à l'identifiant du deuxième AS, et pour renvoyer une réponse du deuxième AS au premier AS conformément à un identifiant du premier AS ; et
le premier AS et le deuxième AS, configurés pour échanger des informations entre le premier AS et le deuxième AS via l'IMS.

18. Système selon la revendication 17, dans lequel l'IMS comprend une I-CSCF et un HSS,
l'I-CSCF est configurée pour recevoir le message acheminant l'identifiant du deuxième AS en provenance du premier AS, pour acquérir des informations d'adresse du deuxième AS par l'intermédiaire du HSS, le deuxième AS s'abonnant au HSS, conformément à l'identifiant du deuxième AS, et pour réexpédier le message au deuxième AS.

19. Système selon la revendication 17, dans lequel l'IMS comprend une I-CSCF et un DNS,
l'I-CSCF est configurée pour recevoir le message acheminant l'identifiant du deuxième AS en provenance du premier AS, pour acquérir des informations d'adresse du deuxième AS par l'intermédiaire du DNS conformément à l'identifiant du deuxième AS, et pour réexpédier le message au deuxième AS.

20. Système selon la revendication 17, dans lequel l'IMS comprend une première S-CSCF et une deuxième S-CSCF,
la première S-CSCF est configurée pour recevoir le message acheminant l'identifiant du deuxième AS en provenance du premier AS et pour réexpédier le message acheminant l'identifiant du deuxième AS à la deuxième S-CSCF ;
la deuxième S-CSCF est configurée pour recevoir le message de la première S-CSCF et pour réexpédier le message au deuxième AS.
